Europäisches Patentamt

(19) European Patent Office

Office européen des brevets

(11) Numéro de publication : **0 148 698**
**B1**

(12) FASCICULE DE BREVET EUROPÉEN

(45) Date de publication du fascicule du brevet :
28.03.90

(21) Numéro de dépôt : 84402699.7

(22) Date de dépôt : 21.12.84

(51) Int. Cl.⁵ : **D 06 P 5/00**, C 09 D 11/14,
B 41 M 3/12,
B 44 C 1/165// D06P1/50

(54) Encres et/ou vernis pour la mise en oeuvre d'un procédé de décoration d'un substrat par transfert d'un motif imprimé sur un support provisoire flexible.

(30) Priorité : 23.12.83 FR 8320710

(43) Date de publication de la demande :
17.07.85 Bulletin 85/29

(45) Mention de la délivrance du brevet :
28.03.90 Bulletin 90/13

(84) Etats contractants désignés :
BE CH DE GB IT LI

(56) Documents cités :
EP—A— 0 001 168
DE—A— 2 808 221
FR—A—  686 274
FR—A— 1 462 516
FR—A— 1 576 815
FR—A— 2 223 199
FR—A— 2 358 989
GB—A—  618 230
GB—A— 1 320 842
US—A— 2 556 078
IBM TECHNICAL DISCLOSURE BULLETIN, vol. 25,
no. 3B, août 1982, pages 1543-1544, New York, US;
A.E. GRAHAM: "Ink formula for thermal ribbon"
"Lehrbuch der Lacke und Beschichtungen" Band III
- Verlag :W.A. Colomb, Seiten 174-179

(73) Titulaire : **Cuvelier, Georges**
**113 avenue Foch**
**F-59700 Marcq en Baroeul (FR)**

**Dargols, Bernard**
**35, rue de l'Aigle**
**F-92250 La Garenne Colombes (FR)**

(72) Inventeur : **Cuvelier, Georges**
**113 avenue Foch**
**F-59700 Marcq en Baroeul (FR)**
Inventeur : **Dargols, Bernard**
**35, rue de l'Aigle**
**F-92250 La Garenne Colombes (FR)**

(74) Mandataire : **Chambon, Gérard et al**
**Cabinet Chambon 6 et 8 avenue Salvador Allende**
**F-93804 Epinay-sur-Seine Cédex (FR)**

## Description

L'invention concerne le transfert sur des substrats divers, d'un motif décoratif, imprimé sur un support provisoire flexible, par application de chaleur et de pression.

Il est connu de décorer un article textile en transférant par chaleur et pression, un dessin imprimé sur un papier à l'aide d'encres dites sublimables, c'est-à-dire qui, sous l'effet de la chaleur et de la pression, passent à l'état gazeux et viennent se fixer sur le tissu. En dehors du fait que le transfert est généralement incomplet, ce qui entraîne un gaspillage important de pigments colorés, l'inconvénient principal de ce procédé connu est que seuls les tissus synthétiques et plus particulièrement ceux constitués de fibres de polyesters, fixent suffisamment les colorants pour que les motifs résistent au lavage.

On a alors cherché à obtenir un transfert stable sur n'importe quel tissu, en utilisant un procédé voisin de la décalcomanie. Le motif se présente, sur son support provisoire comme une couche détachable qui devient, au chauffage, suffisamment adhésive pour adhérer, sous l'effet de la pression, à l'étoffe plus fortement qu'elle n'adhère au support provisoire (brevets FR 2261138, FR 2327356, EP 0018708 A1). Cependant, le motif transféré doit alors être fixé sur l'étoffe par un traitement approprié chimique et/ou thermique.

Il a été également préconisé (GB 2073259 A) d'utiliser des colorants sublimables et de recouvrir le motif imprimé sur le support provisoire par une couche d'une composition comprenant une résine de polyester comme liant des colorants sur le tissu. Ce procédé présente un certain nombre d'inconvénients : le transfert n'est pas total, la composition doit être adaptée à la nature du tissu, absence de pouvoir couvrant de fonds colorés et, surtout, obligation de décoller le support provisoire à chaud ce qui ralentit considérablement la cadence.

Enfin, il est connu par le US-A-2556078 ou encore le GB-A-618230, de transférer, par pression et chaleur, une enduction ou film de résine thermoplastique préalablement déposée sur un support provisoire flexible enduit d'une couche de résine thermodurcissable, non fusible après polymérisation. Un tel transfert ne peut être envisagé pour un motif imprimé car, même si la couche thermodurcissable est susceptible d'être imprimée, elle reste trop cassante, malgré un apport éventuel de plastifiant.

Les encres et/ou vernis selon l'invention permettent de réaliser le transfert pratiquement sur tout support (tissu de fibres synthétiques ou animales ou végétales ou mixtes, non tissé, bois, céramique, etc.), de couleur foncée ou non, avec un rendement excellent (souvent transfert total) et une grande résistance, notamment au lavage, tout en permettant un décollage à froid du support provisoire.

Comme dans les procédés cités ci-avant, en premier lieu, l'impression du motif à transférer est effectuée sur un support provisoire flexible, recouvert d'un film antiadhésif (cire, silicone, téflon, etc.) tels que les papiers connus sous le nom anglais de papiers « release ».

Sur la face antiadhésive du support provisoire, on réalise l'impression du motif, par hélio, flexographie ou sérigraphie, avec des encres à base de pigments non sublimables avec, comme liant, un ester mixte ou un mélange d'esters mixtes de cellulose, cette impression étant précédée et/ou suivie d'une enduction du support provisoire, au moins à l'intérieur des contours du motif, d'un vernis à base du même produit ou mélange utilisé comme liant des encres, et, enfin à effectuer le transfert par pression et chaleur de façon traditionnelle. Généralement, le transfert est effectué entre 150 et 200 degrés C avec pression de 100 à 200 g/cm$^2$ pendant 20 à 30 secondes environ.

Parmi les esters de cellulose disponibles dans le commerce, on choisit ceux qui conduisent aux films les plus souples, permettant la réalisation d'un fort extrait sec et ayant une température de fusion compatible avec les conditions de température du transfert (150 à 210 degrés C).

D'excellents résultats sont obtenus en utilisant pour l'enduction initiale et comme liants pour les encres l'acétobutyrate et/ou l'acétopropionate de cellulose.

Les esters mixtes de cellulose sont, de préférence, l'acétobutyrate et/ou l'acétopropionate de cellulose.

Avantageusement, le vernis d'enduction et/ou les encres contiennent une résine modifiante, telle que l'acétoisobutyrate de saccharose, permettant d'augmenter l'extrait sec et d'améliorer la stabilité de la viscosité sans variation importante de cette dernière.

Afin d'améliorer la souplesse de la zone imprimée après le transfert, il est recommandé d'ajouter un plastifiant dans les vernis et/ou les encres.

L'addition d'un plastifiant dans les vernis est chose courante et l'on connaît un grand nombre de produits plastifiants et notamment, presque tous les phtalates. Cependant, il est indispensable de permettre le décollage à froid du support provisoire après le transfert, afin de permettre de traiter en une seule fois une pluralité de « transferts » de petite surface dont les supports provisoires sont retirés successivement.

Après recherche et essais systématiques, le plastifiant utilisé selon l'invention est la triacétine ou la diacétine ou encore, parmi les phtalates, le dibutylphtalate ou le dioctylphtalate. La diacétine et la triacétine, par suite de leur solubilité, au moins partielle, dans l'eau, présentent l'avantage d'être éliminées au cours des premiers lavages, évitant ainsi les collages au fer lors des repassages, lorsque la proportion du plastifiant est trop importante ou lorsque l'enduction est trop forte en masse.

De préférence, on utilise un solvant ou un mélange de solvants ayant une température d'ébullition d'au moins 120 degrés C et une vitesse d'évaporation (par rapport à l'acétate de butyle) inférieure à 0,4.

De telles encres permettent d'obtenir facilement des effets spéciaux, elles donnent une large gamme de résistances, notamment au lavage, les résistances ne dépendant que de la nature et des caractéristiques des pigments, car il n'y a aucune réaction entre les pigments et les esters cellulosiques.

Les exemples, non limitatifs, qui suivent servent à illustrer l'invention.

Exemple 1

Sur un papier antiadhésif, (« Transfert 75 » d'Arjomari-Prioux) on applique, par sérigraphie, au moyen d'un cadre avec une toile polyester monobrin comportant 57 mailles/cm, suivant des aplats débordant d'environ 2 mm les contours du dessin à imprimer, un vernis d'enduction obtenu par la dissolution de :

60 parties en masse d'acétobutyrate de cellulose (CAB 381.0,5 de Eastman Chemical Products Inc.)

50 parties en masse d'acéto-isobutyrate de saccharose (SAIB 90 de Eastman Chemical Products Inc.) et

10 parties en masse de dibutylphtalate

dans 100 parties en masse d'éther monobutylique de l'éthylène glycol acétate et 18 parties en masse d'éther monobutylique de l'éthylène glycol.

Le motif à transférer est imprimé par repérage sur le papier antiadhésif ainsi enduit, au moyen d'une encre noire réalisée en additionnant

3 parties en masse de noir de carbone et

20 parties en masse d'éther monoéthylique de l'éthylène glycol

à 100 parties en masse du vernis décrit avant.

Les feuilles imprimées ainsi obtenues ont servi à décorer par transfert à 190 degrés C, sous 150 g/cm², durant 30 secondes des tricots de coton (côte 1 et 1) pesant 170 g/m².

L'impression ainsi réalisée après séparation à froid du papier est solide au lavage à 80 degrés C.

Exemple 2

Comme dans l'exemple 1, le papier antiadhésif (« Transfert 75 » d'Arjomari-Prioux) est enduit par sérigraphie, au moyen d'un cadre muni d'un écran polyester monobrin comportant 49 mailles/cm, d'un vernis préparé par dissolution de :

15 parties en masse d'acétobutyrate de cellulose (CAB 381.0,5 de Eastman Chemical Products Inc.)

15 parties en masse d'acétobutyrate de cellulose (CAB 381.0,1 de Eastman Chemical Products Inc.)

20 parties en masse d'acétopropionate de cellulose (CAP 482.0,5 de Eastman Chemical Products Inc.)

40 parties en masse d'acéto-isobutyrate de saccharose (SAIB 90 de Eastman Chemical Products Inc.) et

20 parties en masse de triacétine (triacétate glycérol)

dans 100 parties en masse d'éther monobutylique de l'éthylène glycol acétate et 18 parties en masse d'éther monobutylique de l'éthylène glycol.

Par ailleurs, à partir de ce vernis et des chips nitrocellulosiques de Hartmann International suivants :

Jaune NCA 139

Rouge NCA 326 H C

Bleu NCA 478

Noir NCA 944

dispersés dans 2 fois leur masse d'éther monoéthylique de l'éthylène glycol, on prépare quatre encres permettant une impression en quadrichromie sur le papier enduit.

Les motifs ainsi obtenus ont été transférés sur un tissu toile 100 % coton, pesant 125 g/m², sous une pression de 150 g/cm², à 190 degrés C, pendant 25 secondes. Le retrait du papier après refroidissement permet de constater que le transfert du motif est pratiquement total.

Le motif transféré présente une très bonne solidité au lavage à 60 degrés C.

**Revendications**

1. Encres et/ou vernis comportant un ester mixte ou un mélange d'esters mixtes de cellulose et un plastifiant, pour la mise en œuvre du procédé de décoration d'un substrat, notamment textile, par transfert, par pression et chaleur, d'un motif imprimé sur un support provisoire flexible présentant une face antiadhésive, caractérisés en ce que le plastifiant est le dibutylphtalate ou le dioctylphtalate.

2. Encre et vernis selon la revendication 1, caractérisés en ce que le vernis est obtenu par la dissolution de :

60 parties en masse d'acétobutyrate de cellulose,

50 parties en masse d'acéto-isobutyrate de saccharose

et 10 parties en masse de dibutylphtalate

dans 100 parties en masse d'éther monobutylique de l'éthylène glycol acétate et 18 parties en masse d'éther monobutylique de l'éthylène glycol et que l'encre est réalisée en additionnant :

3 parties en masse de noir de carbone et

20 parties en masse d'éther monoéthylique de l'éthylène glycol

à 100 parties, en masse, dudit vernis.

3. Encres et/ou vernis comportant un ester mixte ou un mélange d'esters mixtes de cellulose et un plastifiant, pour la mise en œuvre du procédé de décoration d'un substrat, notamment textile, par transfert, par pression et chaleur, d'un motif imprimé sur un support provisoire flexible présentant une face antiadhésive, caractérisés en ce que le plastifiant est la triacétine ou la diacétine.

4. Encres et vernis selon la revendication 3, caractérisés en ce que le vernis est obtenu par dissolution de :

30 parties en masse d'acétobutyrate de cellulose,

20 parties en masse d'acétopropionate de cellulose,

40 parties en masse d'acéto-isobutyrate de saccharose

et 20 parties en masse de triacétine (triacétate glycérol)

dans 100 parties en masse d'éther monobutylique de l'éthylène glycol acétate et 18 parties en masse d'éther monobutylique de l'éthylène glycol et que les encres sont réalisées à partir de ce vernis et de chips nitrocellulosiques dispersés dans 2 fois leur masse d'éther monoéthylique de l'éthylène glycol.

## Claims

1. Inks and/or varnishes comprising a mixed ester or a mixture of mixed esters of cellulose and a plasticizer for carrying out the method of decorating a substrate, in particular a textile substrate, by the transfer by pressure and heating of a pattern printed on a flexible transfer sheet having an anti-adhesive surface, characterized in that the plasticizer is dibutyl phthalate or dioctyl phthalate.

2. Ink and varnish as claimed in claim 1, characterized in that the varnish is obtained by dissolving :

60 parts by weight of cellulose acetobutyrate,

50 parts by weight of saccharose acetoisobutyrate,

and 10 parts by weight of dibutyl phthalate in 100 parts by weight of ethylene glycol acetate monobutyl ether and 18 parts by weight of ethylene glycol monobutyl ether, and in that the ink is produced by adding :

3 parts by weight of carbon black and

20 parts by weight of ethylene glycol monoethyl ether to 100 parts by weight of the varnish.

3. Inks and/or varnishes comprising a mixed ester or a mixture of mixed esters of cellulose and a plasticizer for carrying out the method of decorating a substrate, in particular a textile substrate, by the transfer by pressure and heating of a pattern printed on a flexible transfer sheer having an anti-adhesive surface, characterized in that the plasticizer is triacetin or diacetin.

4. Inks and varnishes as claimed in claim 3, characterized in that the varnish is obtained by dissolving :

20 parts by weight of cellulose acetopropionate,

40 parts by weight of saccharose acetoisobutyrate

and 20 parts by weight of triacetin (glyceryl triacetate) in 100 parts by weight of ethylene glycol acetate monobutyl ether and 18 parts by weight of ethylene glycol monobutyl ether, and in that the inks were prepared from this varnish and nitrocellulose chips dispersed in 2 times their weight of ethylene glycol monoethyl ether.

## Patentansprüche

1. Druckfarben und/oder Lack mit einem gemischten Zelluloseester, oder eine Mischung aus gemischten Zelluloseestern, und einem Plastifizierungsmittel zur Durchführung des Verfahrens zum Verzieren eines Substrats, insbesondere einer Textilie, durch Übertragung eines gedruckten Motivs mittels Druck und Wärme auf einen provisorischen biegsamen Träger, der eine nichtklebende Seite aufweist, dadurch gekennzeichnet, daß das Plastifizierungsmittel Dibutylphtalat oder Dioctylphtalat ist.

2. Druckfarbe und Lack nach Anspruch 1, dadurch gekennzeichnet, daß der Lack erhalten wird durch Auflösung von :

60 Gewichtsteilen Zellulose-Acetobutyrat,

50 Gewichtsteilen Saccharose-Aceto-Isobutyrat und

10 Gewichtsteilen Dibutylphtalat in 100 Gewichtsteilen Äthylenglykolacetat-Monobutyläther und 18 Gewichtsteilen Äthylenglykol-Monobutyläther ;

und daß die Druckfarbe hergestellt wird durch Beifügung von :

3 Gewichtsteilen Carbon und

20 Gewichtsteilen Äthylenglykol-Monoäthyläther zu 100 Gewichtsteilen des besagten Lacks.

3. Druckfarbe und/oder Lack mit einem gemischten Zelluloseester, oder einer Mischung aus gemischten Zelluloseestern, und einem Plastifizierungsmittel zur Durchführung des Verfahrens zum Verzieren eines Substrats, insbesondere einer Textilie, durch Übertragung eines gedruckten Motivs mittels Druck und Wärme auf einen provisorischen biegsamen Träger, der eine nichtklebende Seite aufweist, dadurch gekennzeichnet, daß das Plastifizierungsmittel Triacetin oder Diacetin ist.

4. Druckfarben und Lack nach Anspruch 3, dadurch gekennzeichnet, daß der Lack erhalten wird durch Auflösung von :

30 Gewichtsteilen Zellulose-Acetobutyrat,

20 Gewichtsteilen Zellulose-Acetopropionat,

40 Gewichtsteilen Saccharose-Aceto-Isobutyrat und

20 Gewichtsteilen Triacetin (Triacetat-Glycerol)

in 100 Gewichtsteilen Äthylenglykolacetat-Monobutyläther und 18 Gewichtsteilen Äthylenglykol-Monobutyläther ;

und daß die Druckfarben ausgehend von diesem Lack und von Zellulosenitratchips, die in einer dem Doppelten ihrer Menge entsprechenden Menge Äthylenglykol-Monoäthyläther dispergiert sind, hergestellt werden.